# EUROPEAN PATENT SPECIFICATION

(11) **EP 4 251 353 B1**
(45) Date of publication and mention of the grant of the patent: **13.11.2024**
(21) Application number: 21839660.4
(22) Date of filing: 26.11.2021
(51) Int. Cl.: B23B 13/02, B23B 13/12

(54) **GUIDE DEVICE FOR BARS**
FÜHRUNGSVORRICHTUNG FÜR STANGEN
DISPOSITIF DE GUIDAGE POUR BARRES

(30) Priority: 27.11.2020 IT 202000028799
(43) Date of publication of application: 04.10.2023
(73) Proprietor: Cucchi Giovanni & C. S.r.l., 20041 Milan Bussero (IT)
(72) Inventor: CUCCHI, Cesare, 20041 Bussero (IT)
(74) Representative: Luppi Intellectual Property S.r.l.
(86) International application number: PCT/IB2021/061009
(87) International publication number: WO 2022/113014

(56) References cited:
- EP-A1- 0 145 668
- EP-A1- 3 456 444
- EP-A2- 0 214 585
- EP-A2- 0 384 344
- EP-B1- 0 145 668
- EP-B1- 1 321 223
- EP-B1- 1 980 347
- CN-U- 201 997 986
- IT-A1- 201700 093 492
- IT-A1- MI20 090 755
- JP-B2- H0 794 095
- US-A- 5 860 340

## Description

### BACKGROUND OF THE INVENTION

The present invention relates to a guide device for an apparatus for automatic loading of bars for a machine tool, like a lathe that can be of the single-spindle or multiple spindle type.

### PRIOR ART

Different apparatuses are known for guiding and feeding bars to the spindles of a lathe. In general, a bar-feeding apparatus comprises a drum that is rotatable around a horizontal longitudinal axis thereof and supports a plurality of guides suitable for containing and guiding respective bars to be fed to the aforesaid lathe. The guides are distributed both longitudinally along the drum and circumferentially on the latter.

Current systems for advancing and loading bars for machining on machine tools are generally configured with structures that are very complex both from the structural and functional point of view with connected drawbacks and limits like unsatisfactory levels of reliability and high management and maintenance costs.

More precisely, in relation to the bar guide systems, it should be pointed out that the corresponding structural complexity and the considerable overall dimensions, do not facilitate but on the contrary slow the operations of loading the bars. All this has a negative impact on the levels of productivity of the apparatuses.

It should be further noted that current guide systems do not prove to be sufficiently versatile to adapt each time to specific production needs. To give an example, known guide systems are not able to adapt to bars with sections of different dimensions.

One known example of a guide device comprises pairs of semicylindrical elements that are mutually hinged and connected to a drum. In each pair, one of the two semicylindrical elements is in a stationary position with respect to the drum, whereas the other semicylindrical element is movable with respect to the drum. In an open position, the semicylindrical elements are not in mutual contact, are thus spaced apart from one another, so as to permit loading of the bar. In a closed position, the two semicylindrical elements are near one another and in mutual contact to convey and guide the bar to the machine tool.

The aforesaid system is hardly versatile in adapting to different dimensions of the bars to be guided. With a guide device that is so shaped, it is in fact not possible to convey bars having a diameter that is greater than the diameter of the zone bounded inside by the two semicylindrical elements.

Further, problems can arise with loading slim bars, i.e. having a diameter less than the diameter of the guides. In fact, problems can arise in using a guide system having a diameter that is greater than the diameter of the bar to be loaded, because the great extra space available inside the guide, i.e. the resulting gap between the bar and guide surfaces causes unsuitable positioning with the risk of causing jamming of the bar, in particular at the final section facing the lathe.

Incorrect use of the aforesaid guide system can lead to malfunctions for the loading system. Thus, in the case of a variable diameter of the bars to be loaded, it is necessary to replace or modify the guide system so as to adapt the diameter of the bars to be loaded, for example by inserting spacers and/or suitable reduction gears inside the conveying zone, to reduce the free space and adapt the guide device to bars having a smaller diameter.

This entails a significant expenditure of time by the user with clear drawbacks from a financial point of view caused by different factors, from the need to have guides having different sections to the costs and maintenance and replacement of the guides.

Basically, known feeding apparatuses have various limits summarized below. One first limit is in general set by the great complexity both from the structural and functional point of view of the bar loading and guide mechanisms. This often involves unsatisfactory operating times from the point of view of envisaged productivity.

A second limit is that of the possible occurrence of drawbacks using the guide units, that do not always ensure correct advancement of the bars, especially in the case of bars with a very reduced diameter with respect to the inner section of the guide units.

A third limit, which is a consequence of the structural complexity of known apparatuses, is represented by the inevitable occurrence of greater reliability problems, with resulting costly maintenance interventions. The structural complexity caused by current loading and guide systems entails rather high production costs and complicates operations of possible maintenance or replacement of parts, also inevitably causing lengthy machine downtime, with resulting financial losses for the user.

Other guide devices for bars are known from EP3456444 and EP0384344.

In the light of the above, there is ample room for improvement of current bar-feeding apparatuses.

### OBJECTS OF THE INVENTION

One object of the present invention is to improve and simplify structurally and functionally apparatuses for guiding, feeding and advancing bars to machine tools.

Another object of the present invention is to provide a versatile guide device that is able to adapt to different production needs, for example to bars having a small diameter.

Another object is to provide a guide device for advancing and feeding bars provided with a higher operating speed, which is able to lower drastically bar-feeding cycle times.

A further object is to provide a guide device for advancing and feeding bars that, having a more simplified structural and functional configuration than known apparatuses, results in lower manufacturing and maintenance costs and shorter downtime for maintenance.

A further object of the present invention is to provide a guide device that is easy to mount on any existing bar-feeding apparatus, with clear advantages in terms of cost and assembly time.

### SHORT DESCRIPTION OF THE INVENTION

The above can be achieved by the solution as defined in the attached claims.

In particular, the apparatus according to the invention is structurally configured in a manner that is advantageously simplified with respect to prior art apparatuses, and this results in an increase in mechanical reliability and also a reduction in manufacturing and maintenance costs.

The particular configuration of the apparatus, owing to the guide and containment action performed by the second holding and guide means, enables possible flexure to be minimized of bars being advanced and rotated and is able to adapt to bars having a diameter comprised in a wide range, in particular to slim bars, i.e. having very reduced cross sections.

Owing to the solution according to the invention, all the objects set out above are achieved.

### SHORT DESCRIPTION OF THE DRAWINGS

These and further features, according to the present invention, will be clearer from the following description with reference to the attached drawings, in which:

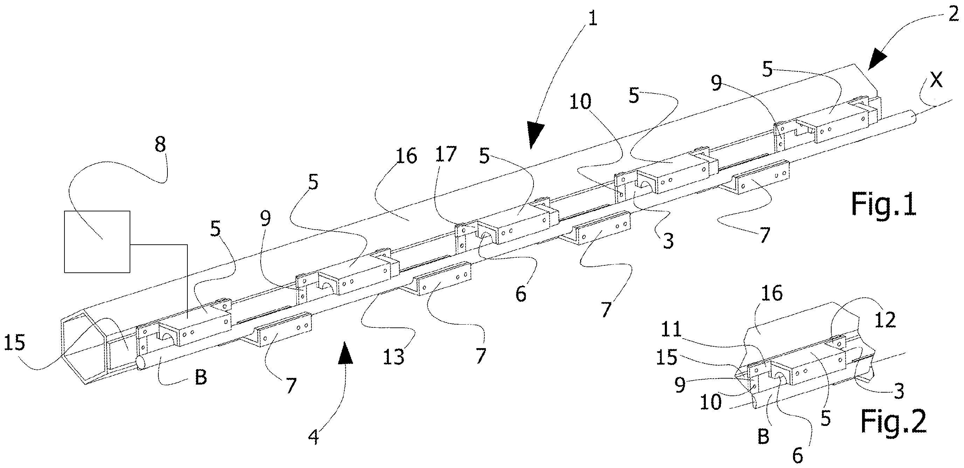

Figure 1 shows the guide device for bars to be fed to a machine tool according to the invention;
Figure 2 shows a detail of the guide device in Figure 1;

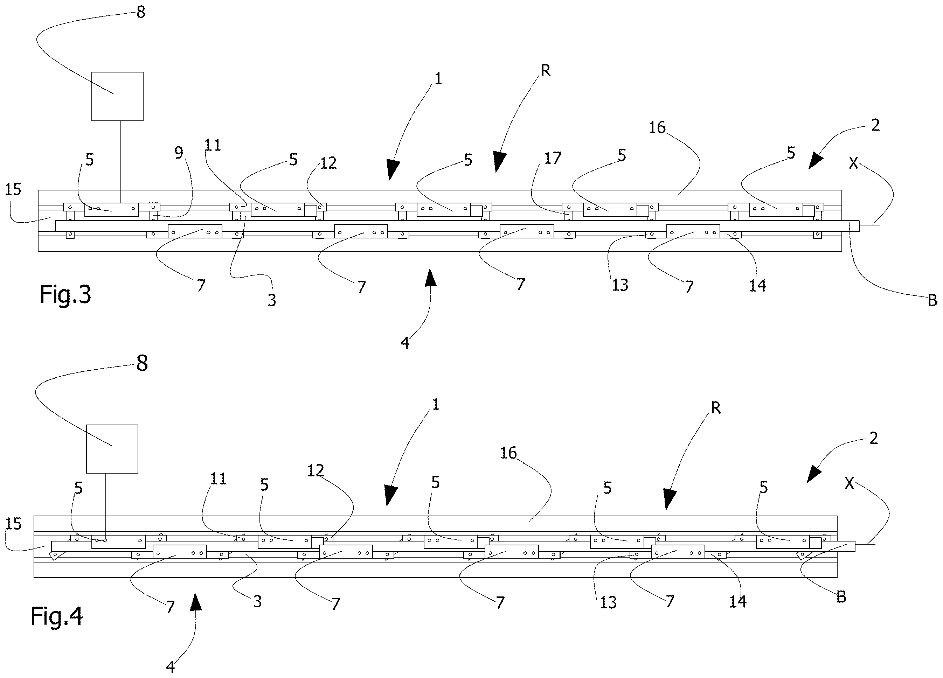

Figure 3 is a side view of the guide device;
Figure 4 is a side view of the guide device in an operating mode;
Figure 5 is a cross section of the guide device;
Figure 6 is a cross section of the guide device shown in Figure 4;
Figure 7 is a side view of part of a bar-feeding apparatus that supports the guide device according to the invention;
Figure 8 shows schematically the operation of an advancement device included in the feeding apparatus;
Figures 9 and 10 show, in a section view, two embodiments of the guide device according to the invention, with which an advancement device of the belt or conveyor type is coupled according to two different possible configurations;
Figure 11 shows, in section, a further embodiment of the guide device coupled with a different type of advancement device;
Figure 12 shows another embodiment of an advancement device included in the feeding apparatus in a rest position;
Figure 13 shows the advancement device of Figure 10 in an operating position.

### DETAILED DESCRIPTION OF THE INVENTION

With reference to the attached Figures, a guide device 1 is shown for guiding and conveying automatically bars B to a machine tool such as for example a lathe, which can be of the single spindle or multispindle type.

The guide device 1 comprises first holding and guide means 2,5 and second holding and guide means 4,7, arranged so as to define an advancement zone 3 for the bars B to be fed to the lathe.

The advancement zone 3 extends along a longitudinal axis X that can, for example, coincide with the longitudinal axis of the cylindrical bars B to be conveyed to the machine tool.

The first holding and guide means 2,5 and the second holding and guide means 4, 7 are configured to establish one or more contact zones with the bar B, so as to hold in position and slide longitudinally the bar B along the advancement zone 3 that is defined by the first holding and guide means 2,5 and the second holding and guide means 4,7.

The first holding and guide means 2,5 and the second holding and guide means 4,7 extend parallel to the axis X and are positioned on sides mutually opposite the longitudinal axis X.

The aforesaid first holding and guide means 2, 5 and second holding and guide means 4, 7 are relatively movable between a rest position R and an engagement position L. When arranged in the rest position R, the first holding and guide means 2,5 and the second holding and guide means 4,7 are at a greater mutual distance and in positions that are further from the advancement zone 3, in order to enable the bar B to be guided along the advancement zone 3 to be positioned therebetween.

When arranged in the engagement position L, the first holding and guide means 2,5 and the second holding and guide means 4,7 are at a lesser mutual distance and nearer than the advancement zone 3, so as to come into contact and maintain the bar B in the correct position along an advancement direction A.

More precisely, on the first holding and guide means 2,5 and on the second holding and guide means 4,7, housing seats 6 are obtained that are suitable for receiving and guiding the bars B. Each housing seat 6 has, according to a transverse plane, a curved concave profile.

In the embodiment shown in the attached figures, the housing seats 6 of the first holding and guide means 2,5 and of the second holding and guide means 4,7 have, according to a transverse plane, a profile of semicircular shape that is such as to bound, when the first holding and guide means 2,5 and the second holding and guide means 4,7 are coupled with one another, a cylindrical advancement zone 3 having a diameter D.

In this direction, the first 2,5 and the second 4,7 holding means are configured to adapt to different diameter values of the bar B. In particular, the guide device 1 that is so configured can guide bars B having a diameter that is the same as or less than the reference diameter D.

The housing seat 6 is coated with or obtained integrally with a material having anti-friction properties, in order to avoid obstacles to and slowing of the sliding of the bar B inside the advancement zone 3. For example, the housing seat 6 can be coated with or obtained integrally with a piece of material having anti-friction properties chosen from a group comprising: polytetrafluoroethylene (PTFE), a polyamide containing graphite, a metal or metal alloy coated with graphite or a ceramic material.

The guide device 1 further comprises a driving member 8 connected to an end of the first holding and guide means 2,5 and/or of the second holding and guide means 4,7 to move the first holding and guide means 2,5 and the second holding and guide means 4,7 between the rest position R and the engagement position L. The driving member 8 comprises a hydraulic or pneumatic actuator.

In one embodiment of the invention, shown in the attached figures, the first holding and guide means 2,5 comprises a first series 2 of distinct guide elements 5 having a block shape. The guide elements 5 are mutually spaced apart and distributed parallel to the axis X.

The second holding and guide means 4,7 comprises a second series 4 of distinct block-shaped guide-elements 7. The guide elements 7 are mutually spaced apart and distributed parallel to said axis X, in a position opposite the guide elements 5 of the first series 2.

More precisely, the guide elements 5 of the first series 2 are arranged staggered with respect to the guide elements 7 of the second series 4, so as to entirely involve the advancement zone 3 and, consequently, the bar B to be guided inserted into the aforesaid zone. The guide elements 5 of the first series 2 are connected mechanically to the guide elements 7 of the second series 4 by connecting means 9, so as to form an articulated guide structure 17.

Owing to the reciprocal mechanical connection between the guide elements 5 and 7, the first series 2 of guide elements 5 and the second series 4 of guide elements 7 are movable in a simultaneous and synchronised manner between the rest position R and the engagement position L

The connecting means 9 comprises connecting rod elements 9, the ends of which are connected respectively to a guide element 5 of the first series 2 and to a guide element 4 of the second series 7.

The connecting rod elements 9 are configured to rotate around respective pivots 10. The pivots 10 are provided in an intermediate zone of the respective connecting rod elements 9 and in a middle zone interposed between the first series 2 of guide elements 5 and the second series 4 of guide elements 7. In this manner, the rotation of the connecting rod elements 9 results in a displacement that is equal but in opposite directions of the first series 2 of the guide elements 5 and of the second series 4 of the guide elements 7.

The connecting rod elements 9 define an articulated parallelogram connection between the first series 2 of guide elements 5 and the second series 4 of guide elements 7. In order to create the articulated parallelogram connection, each of the second ends 12 of the guide elements 5 is connected by a respective connecting rod element 9 to the respective first end 13 of the guide elements 7 and each of the second ends 14 of the guide elements 7 is connected by a respective connecting rod element 9 to the respective first end 11 of the guide elements 5.

According to this arrangement, the guide elements 5 of the first series 2 and the guide elements 7 of the second series 4, starting from the rest position R, approach simultaneously the advancement zone 3, remaining in a position that is parallel to the axis X, until it adopts the engagement position L, coming into contact with the bar B.

The connecting rod elements 9 are pivoted on an oblong connecting plate 15, configured to be able to be mounted on support drum units 16 of a bar-feeding apparatus.

The oblong connecting plate 15 is fixed to the support drum unit 16 by screw means and/or by pin means provided at the pivots 10, so as to engage the screw means with corresponding holes made on the support drum unit 16. Other means of fixing the oblong connecting plate 15 to the support drum unit 16 can nevertheless be envisaged.

As mentioned above, the guide device 1 is configured to be mounted on apparatuses 18 for feeding bars B to a machine tool. The apparatus 18 comprises the aforesaid drum unit 16 supporting a plurality of guide devices 1, as disclosed previously, for simultaneous loading of a plurality of bars B. The guide devices 1 are circumferentially distributed around the support drum units 16. The apparatus 18 further comprises an advancement unit 20, 30, 40 for advancing the bars B to a machine tool.

Some embodiments of the advancement unit 20, 30, 40 are illustrated below.

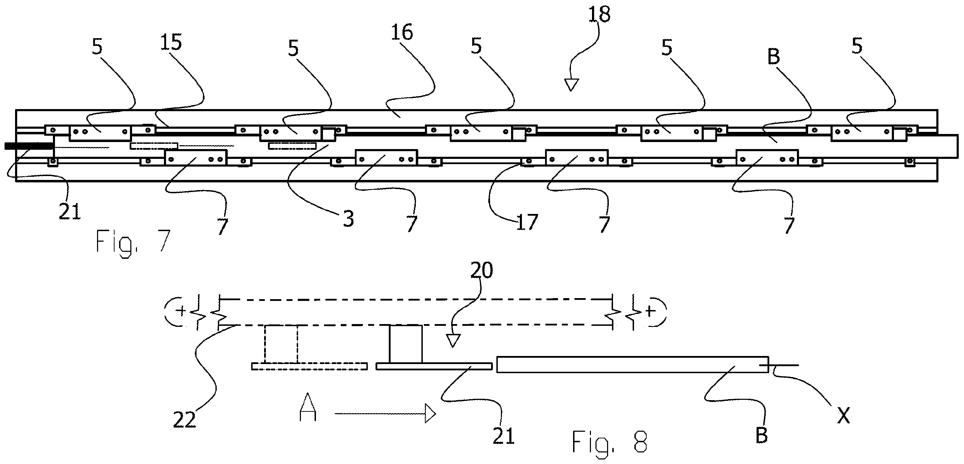

In some first embodiments, with reference to Figures 8 to 10, the advancement unit 20 comprises dragging chain or belt means 22 to which a dragging pusher 21 and/or bushing gripper is connected that is configured to come into contact with the bar B.

The chain means 22 is movable to translate the dragging pusher 21 and/or the bushing gripper, so as to advance a respective bar B along the advancement direction A. The chain means 22 is drivable by an electric motor of brushless type.

In particular, the pusher 21 comes into contact with the rear end of the bar B, exerting on the latter a thrust action that advances the bar B along the advancement direction A. In other words, the pusher 21 is configured to push from the rear the bar B, whilst the dragging bushing gripper, in which the bar B is inserted, is configured to move alternatingly, by a "pilgrim step": during the retraction step, it slides without gripping the surface of the bar whilst advancing forwards it grips, with friction, the bar, causing the bar to move to the lathe. In another possible embodiment, combined or alternating with what has just been disclosed, with the chain means 22 a gripper can be coupled with grasping claw elements that are able to close or open to clamp and release the bar - alternatingly and synchronized with the pilgrim step movement thereof - so as to advance the bar by steps to the lathe.

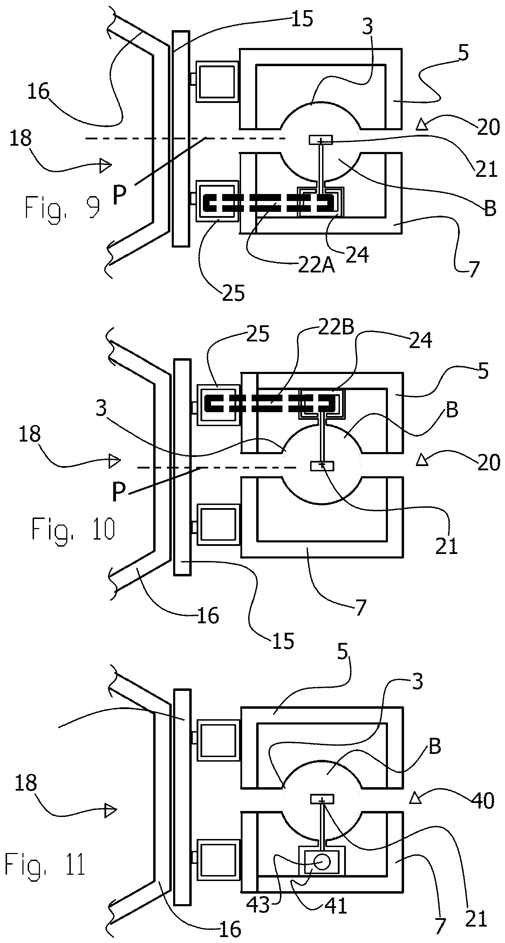

The chain or belt means 22 can alternatively comprise one, two or more chains, arranged according to different possible configurations. In the embodiment shown in Figure 9, the chain 22A traverses the second 7 holding and guide means. In the embodiment of Figure 10, the chain 22B traverses the first holding and guide means 5 holding and guide means. In another embodiment (that is not shown) it is possible to combine these two configurations that have just been shown.

The advancement unit 20 comprises containment and protection channel means 24,25 inside which the dragging chain or belt means 22 is movable. The containment and protection channel means 24,25 comprises profile elements 24 that bound containing cavities and hollow profiled elements 25.

The profiled elements 24 with the containing cavities extend passing through inner zones of the first holding and guide means 5 and/or second holding and guide means 7. The profiled elements 24 have a section that is open - towards the advancement zone 3 - such that from the respective open containing cavities connecting portions can protrude that connect the pusher 21 and/or the gripper to the respective branch of the chain, which is placed and movable inside the containing cavity.

The hollow profiled elements 25 are interposed between the first holding and guide means 5 and/or second holding and guide means 7 and the mechanical connecting elements 9. For example, the hollow profiled elements 25 can have a cross section (according to a plane that is transverse with respect to the axis X) with a closed polygonal profile, for example can be shaped according to the profile elements with a closed square or rectangular section. The cross sections of the channel elements 24,25 are sized so as to leave ample space to the respective chains 22 contained therein so as not to hinder the movement of the latter and not to hinder the movement of the first holding and guide means 5 and/or second holding and guide means 7.

The chain or belt means 22 moves along a closed circuit that extends inside the containing cavities of the channel means 24 and 25 that has just been disclosed. Inside the aforesaid containing cavities, the chain means 22 moves so as to translate the dragging pusher 21 and/or the bushing gripper along the advancement direction A, so as to enable the dragging pusher 21 and/or the bushing gripper to perform the function of pushing and pulling and accompanying on the bar B. In this manner, the bar B is advanced to the machine tool. The movement of the chain or belt means 22, induced by the brushless electric motor, is reversed to enable the pusher 21 to be repositioned - once complete advancement of the bar B has terminated - upstream of the rear end of a new bar B to be fed, or to retract by an appropriate amount the dragging bushing gripper that must engage with the new bar B to be fed. During the advancement movement, the bar B is maintained in the correct position by the guide elements 5,7.

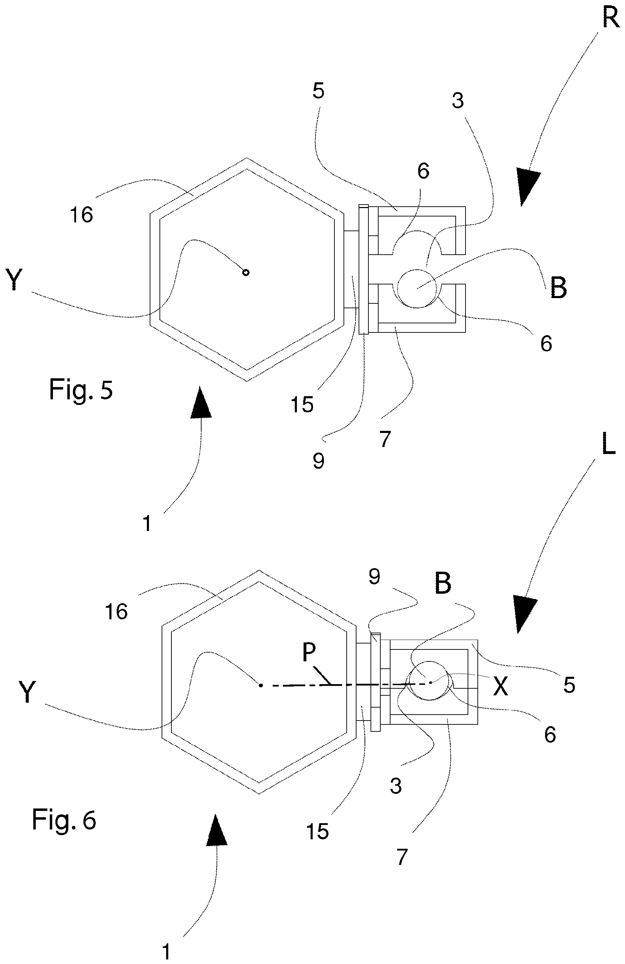

Figures 9-10 show schematically and by way of example the various possible configurations of the advancement unit provided with the belt or chain means 22. The radial plane P has been indicated (in Figure 9), which is defined by the axis X and by an axis Y of the drum, visible for example in Figure 5.

As visible in Figure 9, in one embodiment, a chain element 22A is provided (to which a pusher or a bush gripper is connected) that extends on a plane parallel to the aforesaid radial plane P, traversing the first holding and guide means 5. In another embodiment, visible in Figure 10, a chain element 22B is provided (to which a pusher or a bush gripper is connected) that extends on a respective plane parallel to the aforesaid radial plane P, traversing the second holding and guide means 7.

In another embodiment, it is possible to provide both the chain element 22A and the chain element 22B.

According to a still further embodiment, the advancement unit 40 comprises a sliding rail track 43 mounted on the drum unit 16. On the rail track 43, a slide element 41 is movable, to which a pusher element 21 and/or a dragging bushing gripper is connected to advance a respective bar B along the advancement direction A. Similarly to what has been disclosed with reference to the system of advancement with belt means, also in the case of a rail track 43 and slide element 41 or cursor, it is possible to provide, mounted on the latter, one or more grippers with grasping claw elements that are able to close and open to grasp and release - in a manner alternating and synchronized with the pilgrim step movement - the bar that is thus advanced by steps.

In a first embodiment, the rail track 43 comprises a magnetic or electromagnetic rail and the slide element 41 is an electromagnetic or magnetic unit. The magnetic or electromagnetic interaction with the rail 43 by the slide element 41 determines the sliding movement of the latter along the advancement direction A and in the opposite direction.

The slide element 41 advances along the magnetic rail 43, translating the dragging pusher 21 and/or bushing gripper and accompanying the bar B along the advancement zone 3. After guiding the bar B to the machine tool, the slide element 41 travels back in the opposite direction to the advancement path so as to permit advancement of a further bar B.

In a second embodiment, the rail track 43 and the slide element 41 are coupled with one another according to a screw-nut screw system. The slide element 41, coupled by a thread with a respective thread of the rail track 43, is moved, in the advancement direction A or in the opposite direction thereto, owing to the rotation of the rail track 43 induced by a motor, for example an electric motor of brushless type. The action of pushing and accompanying the bar B is identical to what was disclosed for the aforesaid case of the magnetic rail.

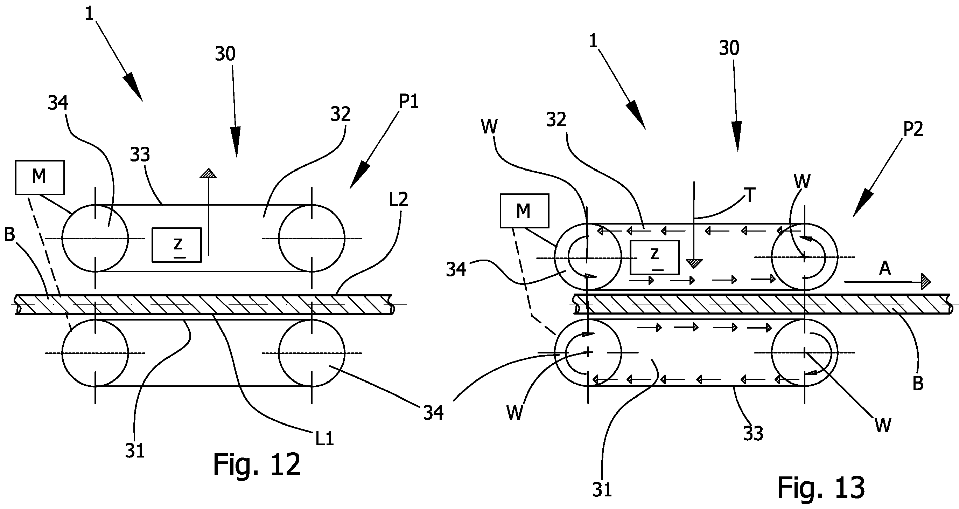

According to a further embodiment, shown in Figures 12 and 13, the advancement unit 30 comprises a support and guide member 31 of the belt type or the conveyor type, configured to supportingly receive, on a first side L1, a bar B and to guide the bar B along the advancement direction A. The advancement unit 30 further comprises a grasping member 32 of the belt type or the conveyor type along a direction T transversely to said advancement direction A from a disengagement position P1 to a locking position P1.

The support and guide member 31 and the grasping member 32 comprise a belt or a conveyor element 33 which is wound around a pair of wheel elements 34, that are spaced apart and rotatable around respective axes W, arranged transversely to the advancement direction A.

The belt or a conveyor element 33 is shaped to come into contact with the side surface of the bar B, to exert thereon the dragging action along to advancement direction A.

In the disengagement position P1, the grasping member 32 is furthest from the support and guide member 31, so as to result being separated from the bar B. In the locking position P2, the grasping member 32 is nearer to the support member 31 and presses longitudinally the bar B from a second side L2 opposite the first side L1 and against the support member 31.

Advancement motor-means M is provided that is configured to rotate the support and guide member 31 and/or the grasping member 32 in the locked P2 position and to drag and advance the bar B along the advancement direction A.

The motor means M comprises an electric motor of brushless type.

A displacement member Z is further provided to translate the grasping member 32 from the disengagement position P1 to the locked position P2.

As is apparent from the above, the guide device 1 successfully achieves the set objects. The device 1 proves itself to be a simplified mechanism for guiding bars to be fed to a machine tool.

The device 1 is suitable for guiding bars with a wide range of diameters. In fact, the first holding and guide means 2,5 and second holding and guide means 4,7 are configured to adapt, during the operation of coupling and contact with the bar B to be guided, to the diameter of the bar B. The guide elements 5,7 approach and come into contact with the bar to be guided as far as possible, in function of the diameter of the latter, so as to ensure correct advancement of the bar to the machine tool.

The guide device 1 has a structural and functional configuration that is greatly simplified with respect to known apparatuses.

The simplicity with which the constructional elements of the guide device 1 are connected together implies a lower occurrence of faults or breakdowns and lower production and maintenance costs.

The operation of the guide device 1 is fast, efficient and reliable. Also owing to the structural simplicity of the machine, using the device 1 ensures high levels of productivity.

Any component that is part of the guide device 1 according to the invention can be replaced by other equivalents in structural and functional terms and the materials, inasmuch as they are compatible with the specific use for which they are intended, can be chosen appropriately in function of the requested requirements and in function of the available prior art.

## Claims

1. Guide device (1) for bars (B) to be fed to a machine tool, comprising first holding and guide means (2,5) and second holding and guide means (4,7) arranged to define an advancement zone (3) for the bars (B), said advancement zone (3) extending according to a longitudinal axis (X), said first holding and guide means (2,5) and said second holding and guide means (4,7) being configured to establish one or more contact zones with said bar (B) so as to retain in position and guide said bar (B) along said advancement zone (3), said first holding and guide means (2,5) and said second holding and guide means (4,7) extending parallel to said axis (X) and being mutually positioned at opposite sides with respect to said longitudinal axis (X), said first holding and guide means (2,5) and said second holding and guide means (4,7) being relatively movable between a resting position (R), wherein said first holding and guide means (2,5) and said second holding and guide means (4,7) are at a greater mutual distance and at furthest positions from said advancement zone (3) to allow the positioning of said bar (B) to be guided along said advancement zone (3), and an engagement position (L), wherein said first holding and guide means (2,5) and said second holding and guide means (4,7) are at a smaller distance and closest to said advancement zone (3) so as to come into contact with said bar (B) adapting to different diameter values of said bar (B), said first holding and guide means (2,5) comprising a first series (2) of distinct block-shaped guide-elements (5) mutually spaced apart and distributed parallel to said axis (X) and said second holding and guide means (4,7) comprising a second series (4) of distinct block-shaped guide elements (7) mutually spaced apart and distributed parallel to said axis (X), said guide elements (5) of said first series (2) of elements being arranged staggered with respect to said guide elements (7) of said second series (4) so as to entirely involve said advancement zone (3), said guide elements (5) of said first series (2) being mechanically connected to said guide elements (7) of said second series (4) by connecting means (9), so as to form an articulated guide structure (17), wherein said first series (2) of guide elements (5) and said second series (4) of guide elements (7) are movable in a simultaneous and synchronised manner between said resting position (R) and said engagement position (L),
said guide device (1) being **CHARACTERIZED IN THAT** said connecting means (9) comprises connecting rod elements (9) the ends of which are connected respectively to a guide element (5) of said first series (2) and to a guide element (4) of said second series (7), said connecting rod elements (9) being configured to rotate around respective pivots (10).

2. Guide device (1) according to claim 1, wherein on said first holding and guide means (2,5) and on said second holding and guide means (4,7) housing seats (6) are obtained that are suitable for housing and guiding said bars (B).

3. Guide device (1) according to claim 1 or 2, further comprising a driving member (8) connected to an end of said first holding and guide means (2,5) and/or of said second holding and guide means (4,7) for moving said first (2,5) and second holding and guide means (4,7) between said rest position (R) and said engagement position (L).

4. Guide device (1) according to any one of the preceding claims, wherein said pivots (10) are provided in an intermediate zone of the respective connecting rod elements (9) and in a middle zone interposed between said first series (2) of guide elements (5) and said second series (4) of said guide elements (7), so that a rotation of said connecting rod elements (9) results in a displacement that is equal but in opposite directions of said first series (2) of guide elements (5) and of said second series (4) of guide elements (7).

5. Guide device (1) according to any one of the preceding claims, wherein said connecting rod elements (9) define an articulated parallelogram connection between said first series (2) of said guide elements (5) and said second series (4) of said guide elements (7), so that said guide elements (5) of said first series (2) and said guide elements (7) of said second series (4), starting from said rest position (R), approach simultaneously said advancement zone (3) remaining in a parallel position with respect to said axis (X), until they adopt said engagement position (L), coming into contact with said bar (B).

6. Guide device (1) according to any one of the preceding claims, wherein each of said second ends (12) of said guide elements (5) is connected by a respective connecting rod element (9) to a respective first end (13) of said guide elements (7), and each of said second ends (14) of guide elements (7) is connected by a respective connecting rod element (9) to a respective first end (11) of said guide elements (5).

7. Guide device (1) according to any one of the preceding claims, wherein each of said housing seats (6) has, according to a transverse plane, a curved concave profile.

8. Guide device (1) according to any one of the preceding claims, wherein each of said housing seats (6) has, according to a transverse plane, a semicircular profile so as to define a cylinder-shaped advancement zone (3) having a diameter (D) with such dimensions as to house said bars (B) with a diameter equal to or lower than said diameter (D).

9. Guide device (1) according to any one of the preceding claims, in which said housing seat (6) is coated or integrally obtained in a single piece of material having anti-friction properties selected from a group comprising: polytetrafluoroethylene (PTFE), a polyamide containing graphite, a metal or metal alloy coated with graphite or a ceramic material.

10. Guide device (1) according to any one of the preceding claims, wherein said driving member (8) comprises a hydraulic or pneumatic actuator.

11. Guide device (1) according to any one of the preceding claims, wherein said connecting rod elements (9) are pivoted on an oblong connection plate (15), said oblong connection plate (15) being configured to be mounted on support drum units (16) of a bar-feeding apparatus, and said oblong connection plate (15) being fixable to said support drum units (16) by screw means and/or by pin means provided at said pivots (10) and engaging with corresponding holes made on said support drum units (16).

12. Apparatus (18) for feeding bars (B) to a machine tool, comprising a drum unit (16) supporting a plurality of guide devices (1) according to any one of the preceding claims, for simultaneous loading of a plurality of bars (B), wherein said guide devices (1) are circumferentially distributed around said support drum units (16) and comprising a unit (20, 30, 40) for advancing said bars (B) to a machine tool.

13. Apparatus (18) according to claim 12, wherein said advancement unit (30) comprises:
- a support and guide member (31) of the belt type or the conveyor type configured to support, on a first side (L1), a bar (B) and configured to guide said bar (B) along the advancement direction (A),
- a grasping member (32) of the belt type or the conveyor type, along a direction (T) transversely to said advancement direction (A), from a disengagement position (P1), in which said grasping member (32) is furthest from said support and guide member (31) so as to be separated from said bar (B), to a locking position (P2), in which said grasping member (32) is nearest to said support member (31) for pushing longitudinally said bar (B) from a second side (L2) opposite said first side (L1) and against said support member (31),
- advancement motor-means (M) configured to rotate said support and guide member (31) and/or said grasping member (32) in said locking position (P2) to drag and advance said bar (B) along said advancement direction (A).

14. Apparatus (18) according to claim 13, wherein said support and guide member (31) and grasping member (32) comprise a belt or a conveyor element (33) which are wound around a pair of wheel elements (34) that are spaced apart and rotatable around respective axes (W) arranged transversely to said advancement direction (A), said belt or conveyor element (33) being conformed to come into contact with the side surface of said bar (B) to exert thereon the dragging action along said advancement direction (A).

15. Apparatus (18) according to claim 13 or 14, wherein said motor means comprises an electric motor of brushless type, and in which a displacement member (Z) is further provided to translate said grasping member (32) from said disengagement position (P1) to said locking position (P2).

16. Apparatus (18) according to claim 12, wherein said advancement unit (20) comprises dragging chain or belt means (22) drivable by an electric motor of brushless type said chain or belt means (22) being connected to a pusher (21) and/or a dragging bushing gripper and/or a gripper with movable claw elements, configured to come into contact with said bar (B), said chain means (22) being movable to translate said pusher (21) and/or said dragging bushing gripper so as to advance a respective bar (B) along said advancement direction (A).

17. Apparatus (18) according to claim 16, wherein containment and protection channel means (24, 25) is provided inside which said dragging chain or belt means (22) is movable, wherein said containment and protection channel elements (24,25) comprise profile elements (24) with containment cavities obtained inside said first (5) and/or second holding and guide means (7), and hollow profiled elements (25) interposed between said first (5) and/or second holding means (7) and said mechanical connecting elements (9).

18. Apparatus (18) according to claim 12, wherein said advancement unit (40) comprises a sliding rail track (43) mounted on said drum unit (16) and on which a slide element is movable (41), which is connected to a pusher element (21) and/or a dragging bushing gripper and/or a gripper with movable claw elements, to advance a respective bar (B) along said advancement direction (A).

## Patentansprüche

1. Führungsvorrichtung (1) für Stangen (B), die einer Werkzeugmaschine zugeführt werden sollen, umfassend ersten Halte- und Führungsmitteln (2, 5) und zweiten Halte- und Führungsmitteln (4, 7), die so angeordnet sind, dass sie eine Vorschubzone (3) für die Stangen (B) definieren, wobei die Vorschubzone (3) sich entlang einer Längsachse (X) erstreckt, wobei die ersten Halte- und Führungsmittel (2, 5) und die zweiten Halte- und Führungsmittel (4, 7) so konfiguriert sind, dass sie eine oder mehrere Kontaktzonen mit der Stange (B) bilden, um die Stange (B) in Position zu halten und entlang der Vorschubzone (3) zu führen, wobei die ersten Halte- und Führungsmittel (2, 5) und die zweiten Halte- und Führungsmittel (4, 7) parallel zu der Achse (X) verlaufen und in Bezug auf die Längsachse (X) gegenseitig auf gegenüberliegenden Seiten positioniert sind, wobei die ersten Halte- und Führungsmittel (2,5) und die zweiten Halte- und Führungsmittel (4,7) relativ zueinander beweglich sind zwischen einer Ruheposition (R), wobei die ersten Halte- und Führungsmittel (2, 5) und die zweiten Halte- und Führungsmittel (4, 7) einen größeren gegenseitigen Abstand aufweisen und am weitesten von der Vorschubzone (3) entfernt sind, um die Positionierung der Stange (B) zu ermöglichen, die entlang der Vorschubzone (3) geführt werden soll, und eine Eingriffsposition (L), wobei die ersten Halte- und Führungsmittel (2, 5) und die zweiten Halte- und Führungsmittel (4, 7) einen kleineren Abstand aufweisen und der Vorschubzone (3) am nächsten sind, um mit der Stange (B) in Kontakt zu kommen und sich an unterschiedliche Durchmesserwerte der Stange (B) anzupassen, wobei die ersten Halte- und Führungsmittel (2, 5) eine erste Reihe (2) von unterschiedlichen blockförmigen Führungselementen (5) umfassen, die voneinander beabstandet und parallel zu der Achse (X) verteilt sind, und wobei die zweiten Halte- und Führungsmittel (4, 7) eine zweite Reihe (4) von unterschiedlichen blockförmigen Führungselementen (7) umfassen, die voneinander beabstandet und parallel zu der Achse (X) verteilt sind, wobei die Führungselemente (5) der ersten Reihe (2) von Elementen versetzt zu den Führungselementen (7) der zweiten Reihe (4) angeordnet sind, um die Vorschubzone (3) vollständig einzuschließen, wobei die Führungselemente (5) der ersten Reihe (2) durch Verbindungsmittel (9) mechanisch mit den Führungselementen (7) der zweiten Reihe (4) verbunden sind, um eine gelenkige Führungsstruktur (17) zu bilden, wobei die erste Reihe (2) von Führungselementen (5) und die zweite Reihe (4) von Führungselementen (7) gleichzeitig und synchronisiert zwischen der Ruheposition (R) und der Eingriffsposition (L) bewegbar sind,
wobei die Führungsvorrichtung (1) **DADURCH GEKENNZEICHNET IST, DASS** die Verbindungseinrichtung (9) Pleuelstangenelemente (9) umfasst, deren Enden jeweils mit einem Führungselement (5) der ersten Reihe (2) und mit einem Führungselement (4) der zweiten Reihe (7) verbunden sind, wobei die Pleuelstangenelemente (9) so konfiguriert sind, dass sie sich um jeweilige Drehzapfen (10) drehen.

2. Führungsvorrichtung (1) nach Anspruch 1, wobei an den ersten Halte- und Führungsmitteln (2, 5) und an den zweiten Halte- und Führungsmitteln (4, 7) Aufnahmesitze (6) vorhanden sind, die zur Aufnahme und Führung der Stangen (B) geeignet sind.

3. Führungsvorrichtung (1) nach Anspruch 1 oder 2, die ferner ein Antriebselement (8) umfasst, das mit einem Ende des ersten Halte- und Führungsmittels (2, 5) und/oder des zweiten Halte- und Führungsmittels (4, 7) verbunden ist, um das erste (2, 5) und zweite Halte- und Führungsmittel (4, 7) zwischen der Ruheposition (R) und der Eingriffsposition (L) zu bewegen.

4. Führungsvorrichtung (1) nach einem der vorhergehenden Ansprüche, wobei die Drehpunkte (10) in einem Zwischenbereich der jeweiligen Pleuelelemente (9) und in einem Mittelbereich zwischen der ersten Reihe (2) von Führungselementen (5) und der zweiten Reihe (4) von Führungselementen (7) vorgesehen sind, so dass eine Drehung der Pleuelelemente (9) eine gleiche, jedoch in entgegengesetzte Richtungen gerichtete Verschiebung der ersten Reihe (2) von Führungselementen (5) und der zweiten Reihe (4) von Führungselementen (7) zur Folge hat.

5. Führungsvorrichtung (1) nach einem der vorhergehenden Ansprüche, wobei die Verbindungsstangenelemente (9) eine gelenkige Parallelogrammverbindung zwischen der ersten Reihe (2) der Führungselemente (5) und der zweiten Reihe (4) der Führungselemente (7) definieren, so dass die Führungselemente (5) der ersten Reihe (2) und die Führungselemente (7) der zweiten Reihe (4), ausgehend von der Ruheposition (R), sich gleichzeitig der Vorschubzone (3) nähern, wobei sie in einer parallelen Position in Bezug auf die Achse (X) bleiben, bis sie die Eingriffsposition (L) einnehmen und in Kontakt mit der Stange (B) kommen.

6. Führungsvorrichtung (1) nach einem der vorhergehenden Ansprüche, wobei jedes der zweiten Enden (12) der Führungselemente (5) durch ein entsprechendes Verbindungsstangenelement (9) mit einem entsprechenden ersten Ende (13) der Führungselemente (7) verbunden ist und jedes der zweiten Enden (14) der Führungselemente (7) durch ein entsprechendes Verbindungsstangenelement (9) mit einem entsprechenden ersten Ende (11) der Führungselemente (5) verbunden ist.

7. Führungsvorrichtung (1) nach einem der vorhergehenden Ansprüche, wobei jeder der Gehäusesitze (6) gemäß einer Querebene ein gekrümmtes konkaves Profil aufweist.

8. Führungsvorrichtung (1) nach einem der vorhergehenden Ansprüche, wobei jeder der Aufnahmesitze (6) in Bezug auf eine Querebene ein halbkreisförmiges Profil aufweist, um eine zylinderförmige Vorschubzone (3) mit einem Durchmesser (D) zu definieren, der so bemessen ist, dass er die Stangen (B) mit einem Durchmesser gleich oder kleiner als der Durchmesser (D) aufnehmen kann.

9. Führungsvorrichtung (1) nach einem der vorhergehenden Ansprüche, bei der der Gehäusesitz (6) beschichtet ist oder integral aus einem einzigen Stück Material mit Gleiteigenschaften besteht, das aus einer Gruppe ausgewählt ist, die umfasst: Polytetrafluorethylen (PTFE), ein Polyamid mit Graphit, ein mit Graphit beschichtetes Metall oder eine Metalllegierung oder ein keramisches Material.

10. Führungsvorrichtung (1) nach einem der vorhergehenden Ansprüche, wobei das Antriebselement (8) einen hydraulischen oder pneumatischen Aktuator umfasst.

11. Führungsvorrichtung (1) nach einem der vorhergehenden Ansprüche, wobei die Verbindungsstangenelemente (9) an einer länglichen Verbindungsplatte (15) drehbar gelagert sind, wobei die längliche Verbindungsplatte (15) zur Montage an Stütztrommeleinheiten (16) einer Stangenzuführvorrichtung ausgebildet ist und wobei die längliche Verbindungsplatte (15) durch Schraubmittel und/oder Stiftmittel an den Stütztrommeleinheiten (16) befestigbar ist, die an den Drehzapfen (10) bereitgestellt sind und in entsprechende Löcher an den Stütztrommeleinheiten (16) eingreifen.

12. Vorrichtung (18) zum Zuführen von Stangen (B) zu einer Werkzeugmaschine, die eine Trommeleinheit (16) umfasst, die eine Vielzahl von Führungsvorrichtungen (1) gemäß einem der vorhergehenden Ansprüche trägt, zum gleichzeitigen Laden einer Vielzahl von Stangen (B), wobei die Führungsvorrichtungen (1) kreisförmig um die Stütztrommeleinheiten (16) verteilt sind, und eine Einheit (20, 30, 40) zum Vorschieben der Stangen (B) zu einer Werkzeugmaschine umfasst.

13. Vorrichtung (18) nach Anspruch 12, wobei die Vorschubeinheit (30) umfasst:
- ein Stütz- und Führungselement (31) vom Bandtyp oder vom Förderbandtyp, das so konfiguriert ist, dass es auf einer ersten Seite (L1) eine Stange (B) stützt und so konfiguriert ist, dass es die Stange (B) entlang der Vorschubrichtung (A) führt,
- ein Greifelement (32) vom Bandtyp oder Förderbandtyp, entlang einer Richtung (T) quer zur Vorschubrichtung (A), von einer Löseposition (P1), in der das Greifelement (32) am weitesten vom Stütz- und Führungselement (31) entfernt ist, um von der Stange (B) getrennt zu sein, in eine Verriegelungsposition (P2), in der das Greifelement (32) dem Stützelement (31) am nächsten ist, um die Stange (B) in Längsrichtung von einer der ersten Seite (L1) gegenüberliegenden zweiten Seite (L2) aus gegen das Stützelement (31) zu drücken,
- Vorschubmotormittel (M), die konfiguriert sind, um das Stütz- und Führungselement (31) und/oder das Greifelement (32) in der Verriegelungsposition (P2) zu drehen, um die Stange (B) entlang der Vorschubrichtung (A) zu ziehen und vorzuschieben.

14. Vorrichtung (18) nach Anspruch 13, wobei das Stütz- und Führungselement (31) und das Greifelement (32) ein Band oder ein Förderelement (33) umfassen, die um ein Paar Radelemente (34) gewickelt sind, die voneinander beabstandet sind und um jeweilige Achsen (W) drehbar sind, die quer zur Vorschubrichtung (A) angeordnet sind, wobei das Band oder Förderelement (33) so ausgebildet ist, dass es mit der Seitenfläche der Stange (B) in Kontakt kommt, um darauf die Ziehwirkung entlang der Vorschubrichtung (A) auszuüben.

15. Vorrichtung (18) nach Anspruch 13 oder 14, wobei die Motoreinrichtung einen bürstenlosen Elektromotor umfasst und wobei außerdem ein Verschiebungselement (Z) vorgesehen ist, um das Greifelement (32) aus der Löseposition (P1) in die Verriegelungsposition (P2) zu verschieben.

16. Vorrichtung (18) nach Anspruch 12, wobei die Vorschubeinheit (20) ein Schleppketten- oder -riemenmittel (22) umfasst, das durch einen bürstenlosen Elektromotor angetrieben werden kann, wobei das Ketten- oder Riemenmittel (22) mit einem Schieber (21) und/oder einem Schleppbuchsengreifer und/oder einem Greifer mit beweglichen Klauenelementen verbunden ist, die so konfiguriert sind, dass sie mit der Stange (B) in Kontakt kommen, wobei das Kettenmittel (22) beweglich ist, um den Schieber (21) und/oder den Schleppbuchsengreifer zu verschieben, um eine jeweilige Stange (B) entlang der Vorschubrichtung (A) vorzuschieben.

17. Vorrichtung (18) nach Anspruch 16, wobei eine Eindämmungs- und Schutzkanaleinrichtung (24, 25) vorgesehen ist, in deren Inneren die Schleppkette oder das Schleppband (22) beweglich ist, wobei die Eindämmungs- und Schutzkanalelemente (24, 25) Profilelemente (24) mit Eindämmungshohlräumen umfassen, die sich im Inneren der ersten (5) und/oder zweiten Halte- und Führungseinrichtung (7) befinden, und hohle Profilelemente (25), die zwischen der ersten (5) und/oder zweiten Halteeinrichtung (7) und den mechanischen Verbindungselementen (9) angeordnet sind.

18. Vorrichtung (18) nach Anspruch 12, wobei die Vorschubeinheit (40) eine Gleitschienenbahn (43) umfasst, die an der Trommeleinheit (16) montiert ist und auf der ein Gleitelement (41) beweglich ist, das mit einem Schubelement (21) und/oder einem Schleppbuchsengreifer und/oder einem Greifer mit beweglichen Klauenelementen verbunden ist, um einen jeweiligen Stab (B) entlang der Vorschubrichtung (A) vorzuschieben.

## Revendications

1. Dispositif de guidage (1) pour des barres (B) destinées à être introduites dans une machine-outil, comprenant des premiers moyens de maintien et de guidage (2, 5) et des seconds moyens de maintien et de guidage (4, 7) agencés pour définir une zone d'avancement (3) pour les barres (B), ladite zone d'avancement (3) s'étendant selon un axe longitudinal (X), lesdits premiers moyens de maintien et de guidage (2, 5) et lesdits seconds moyens de maintien et de guidage (4, 7) étant conçus pour établir une ou plusieurs zones de contact avec ladite barre (B) de manière à retenir en position et à guider ladite barre (B) le long de ladite zone d'avancement (3), lesdits premiers moyens de maintien et de guidage (2, 5) et lesdits seconds moyens de maintien et de guidage (4, 7) s'étendant parallèlement audit axe (X) et étant mutuellement positionnés au niveau de côtés opposés par rapport audit axe longitudinal (X), lesdits premiers moyens de maintien et de guidage (2, 5) et lesdits seconds moyens de maintien et de guidage (4, 7) étant relativement mobiles entre une position de repos (R), dans lequel lesdits premiers moyens de maintien et de guidage (2, 5) et lesdits seconds moyens de maintien et de guidage (4, 7) sont à une plus grande distance mutuelle et au niveau de positions les plus éloignées de ladite zone d'avancement (3) pour permettre au positionnement de ladite barre (B) d'être guidé le long de ladite zone d'avancement (3), et une position de prise (L), dans lequel lesdits premiers moyens de maintien et de guidage (2, 5) et lesdits seconds moyens de maintien et de guidage (4, 7) sont à une distance plus petite et plus proche de ladite zone d'avancement (3) de manière à entrer en contact avec ladite barre (B) en s'adaptant à différentes valeurs de diamètre de ladite barre (B), lesdits premiers moyens de maintien et de guidage (2, 5) comprenant une première série (2) d'éléments de guidage (5) distincts, en forme de blocs, mutuellement espacés et répartis parallèlement audit axe (X) et lesdits seconds moyens de maintien et de guidage (4, 7) comprenant une seconde série (4) d'éléments de guidage (7) distincts, en forme de blocs, mutuellement espacés et répartis parallèlement audit axe (X), lesdits éléments de guidage (5) de ladite première série (2) d'éléments étant disposés en quinconce par rapport auxdits éléments de guidage (7) de ladite seconde série (4) de manière à entourer entièrement ladite zone d'avancement (3), lesdits éléments de guidage (5) de ladite première série (2) étant reliés mécaniquement auxdits éléments de guidage (7) de ladite seconde série (4) par des moyens de liaison (9), de manière à former une structure de guidage articulée (17), dans lequel ladite première série (2) d'éléments de guidage (5) et ladite seconde série (4) d'éléments de guidage (7) sont mobiles de manière simultanée et synchronisée entre ladite position de repos (R)et ladite position de prise (L),
ledit dispositif de guidage (1) étant **CARACTÉRISÉ EN CE QUE** ledit moyen de liaison (9) comprend des éléments de bielle (9) dont les extrémités sont reliées respectivement à un élément de guidage (5) de ladite première série (2) et à un élément de guidage (4) de ladite seconde série (7), lesdits éléments de bielle (9) étant conçus pour tourner autour de pivots (10) respectifs.

2. Dispositif de guidage (1) selon la revendication 1, dans lequel sur lesdits premiers moyens de maintien et de guidage (2, 5) et sur lesdits seconds moyens de maintien et de guidage (4, 7) sont obtenus des sièges de logement (6) qui conviennent au logement et au guidage desdites barres (B).

3. Dispositif de guidage (1) selon la revendication 1 ou 2, comprenant en outre un élément d'entraînement (8) relié à une extrémité desdits premiers moyens de maintien et de guidage (2, 5) et/ou desdits seconds moyens de maintien et de guidage (4, 7) pour déplacer lesdits premiers (2, 5) et seconds moyens de maintien et de guidage (4, 7) entre ladite position de repos (R) et ladite position de prise (L).

4. Dispositif de guidage (1) selon l'une quelconque des revendications précédentes, dans lequel lesdits pivots (10) sont fournis dans une zone intermédiaire des éléments de bielle (9) respectifs et dans une zone médiane interposée entre ladite première série (2) d'éléments de guidage (5) et ladite seconde série (4) desdits éléments de guidage (7), de sorte qu'une rotation desdits éléments de bielle (9) entraîne un déplacement égal mais dans des directions opposées de ladite première série (2) d'éléments de guidage (5) et de ladite seconde série (4) d'éléments de guidage (7).

5. Dispositif de guidage (1) selon l'une quelconque des revendications précédentes, dans lequel lesdits éléments de bielle (9) définissent une liaison par parallélogramme articulé entre ladite première série (2) desdits éléments de guidage (5) et ladite seconde série (4) desdits éléments de guidage (7), de sorte que lesdits éléments de guidage (5) de ladite première série (2) et lesdits éléments de guidage (7) de ladite seconde série (4), partant de ladite position de repos (R), s'approchent simultanément de ladite zone d'avancement (3) en restant dans une position parallèle par rapport audit axe (X), jusqu'à ce qu'ils adoptent ladite position de prise (L), en entrant en contact avec ladite barre (B).

6. Dispositif de guidage (1) selon l'une quelconque des revendications précédentes, dans lequel chacune desdites secondes extrémités (12) desdits éléments de guidage (5) est reliée par un élément de bielle (9) respectif à une première extrémité (13) respective desdits éléments de guidage (7), et chacune desdites secondes extrémités (14) des éléments de guidage (7) est reliée par un élément de bielle (9) respectif à une première extrémité (11) respective desdits éléments de guidage (5).

7. Dispositif de guidage (1) selon l'une quelconque des revendications précédentes, dans lequel chacun des sièges de logement (6) présente, selon un plan transversal, un profil concave incurvé.

8. Dispositif de guidage (1) selon l'une quelconque des revendications précédentes, dans lequel chacun desdits sièges de logement (6) présente, selon un plan transversal, un profil semi-circulaire de manière à définir une zone d'avancement (3) en forme de cylindre ayant un diamètre (D) dont les dimensions sont telles qu'elles permettent de loger lesdites barres (B) d'un diamètre égal ou inférieur audit diamètre (D).

9. Dispositif de guidage (1) selon l'une quelconque des revendications précédentes, dans lequel ledit siège de logement (6) est revêtu ou obtenu intégralement en une seule pièce d'un matériau ayant des propriétés anti-friction choisi dans un groupe comprenant : le polytétrafluoroéthylène (PTFE), un polyamide contenant du graphite, un métal ou un alliage métallique revêtu de graphite ou un matériau céramique.

10. Dispositif de guidage (1) selon l'une quelconque des revendications précédentes, dans lequel ledit élément d'entraînement (8) comprend un actionneur hydraulique ou pneumatique.

11. Dispositif de guidage (1) selon l'une quelconque des revendications précédentes, dans lequel lesdits éléments de bielle (9) sont pivotés sur une plaque de liaison oblongue (15), ladite plaque de liaison oblongue (15) étant conçue pour être montée sur des unités de tambour de support (16) d'un appareil d'alimentation en barres, et ladite plaque de liaison oblongue (15) pouvant être fixée auxdites unités de tambour de support (16) par des moyens à vis et/ou par des moyens à goupilles fournis au niveau desdits pivots (10) et venant en prise avec des trous correspondants pratiqués sur lesdites unités de tambour de support (16).

12. Appareil (18) d'alimentation en barres (B) d'une machine-outil, comprenant une unité de tambour (16) supportant une pluralité de dispositifs de guidage (1) selon l'une quelconque des revendications précédentes, pour le chargement simultané d'une pluralité de barres (B), dans lequel lesdits dispositifs de guidage (1) sont répartis circonférentiellement autour desdites unités de tambours de support (16) et comprenant une unité (20, 30, 40) pour faire avancer lesdites barres (B) jusqu'à une machine-outil.

13. Appareil (18) selon la revendication 12, dans lequel ladite unité d'avancement (30) comprend :
- un élément de support et de guidage (31) de type courroie ou de type convoyeur conçu pour supporter, sur un premier côté (L1), une barre (B) et conçu pour guider ladite barre (B) le long de la direction d'avancement (A),
- un élément de préhension (32) du type courroie ou du type convoyeur, le long d'une direction (T) transversale à ladite direction d'avancement (A), depuis une position de désolidarisation (P1), dans laquelle ledit élément de préhension (32) est le plus éloigné dudit élément de support et de guidage (31) de manière à être séparé de ladite barre (B), jusqu'à une position de verrouillage (P2), dans laquelle ledit élément de préhension (32) est le plus proche dudit élément de support (31) pour pousser longitudinalement ladite barre (B) depuis un second côté (L2) opposé audit premier côté (L1) et contre ledit élément de support (31),
- un moyen moteur d'avancement (M) conçu pour faire tourner ledit élément de support et de guidage (31) et/ou ledit élément de préhension (32) dans ladite position de verrouillage (P2) afin de traîner et de faire avancer ladite barre (B) le long de ladite direction d'avancement (A).

14. Appareil (18) selon la revendication 13, dans lequel ledit élément de support et de guidage (31) et ledit élément de préhension (32) comprennent une courroie ou un élément convoyeur (33) qui sont enroulés autour d'une paire d'éléments de roue (34) qui sont espacés et rotatifs autour d'axes respectifs (W) disposés transversalement à ladite direction d'avancement (A), ladite courroie ou ledit élément convoyeur (33) étant conformé pour entrer en contact avec la surface latérale de ladite barre (B) afin d'exercer sur celle-ci l'action de traînage le long de ladite direction d'avancement (A).

15. Appareil (18) selon la revendication 13 ou 14, dans lequel ledit moyen moteur comprend un moteur électrique de type sans balai, et dans lequel un élément de déplacement (Z) est en outre fourni pour translater ledit élément de préhension (32) de ladite position de désolidarisation (PI) à ladite position de verrouillage (P2).

16. Appareil (18) selon la revendication 12, dans lequel ladite unité d'avancement (20) comprend un moyen à chaîne ou à courroie de traînage (22) entraînable par un moteur électrique de type sans balai, ledit moyen à chaîne ou à courroie (22) étant relié à un pousseur (21) et/ou à une pince à douille de traînage et/ou à une pince à éléments de griffes mobiles, conçus pour entrer en contact avec ladite barre (B), lesdits moyens à chaîne (22) étant mobiles pour translater ledit pousseur (21) et/ou ladite pince à douille de traînage de manière à faire avancer une barre (B) respective le long de ladite direction d'avancement (A).

17. Appareil (18) selon la revendication 16, dans lequel un moyen de canal de confinement et de protection (24, 25) est fourni à l'intérieur duquel ladite chaîne ou courroie de traînage (22) est mobile, dans lequel lesdits éléments de canal de confinement et de protection (24, 25) comprennent des éléments profilés (24) avec des cavités de confinement obtenues à l'intérieur dudit premier (5) et/ou second moyen de maintien et de guidage (7), et des éléments profilés creux (25) interposés entre lesdits premiers (5) et/ou seconds moyens de maintien (7) et lesdits éléments de liaison mécanique (9).

18. Appareil (18) selon la revendication 12, dans lequel ladite unité d'avancement (40) comprend un rail coulissant (43) monté sur ladite unité de tambour (16) et sur lequel un élément coulissant est mobile (41), qui est relié à un élément pousseur (21) et/ou à une pince à douille de traînage et/ou à une pince à éléments de griffe mobiles, pour faire avancer une barre (B) respective le long de ladite direction d'avancement (A).
